# FASCICULE DE BREVET EUROPEEN

(11) **EP 4 251 934 B1**
(45) Date de publication et mention de la délivrance du brevet: **15.05.2024**
(21) Numéro de dépôt: 21819825.7
(22) Date de dépôt: 25.11.2021
(51) Int. Cl.: F25B 21/00

(54) **MACHINE MAGNETOCALORIQUE**
MAGNETOKALORISCHE MASCHINE
MAGNETOCALORIC MACHINE

(30) Priorité: 26.11.2020 FR 2012166
(43) Date de publication de la demande: 04.10.2023
(73) Titulaire: magnoric, 67120 Duppigheim (FR)
(72) Inventeur: MARRAZZO, Frédéric, 67550 Vendenheim (FR); RISSER, Michel, 67280 Oberhaslach (FR)
(74) Mandataire: Cabinet Laurent & Charras
(86) Numéro de dépôt international: PCT/EP2021/082947
(87) Numéro de publication internationale: WO 2022/112391

(56) Documents cités:
- FR-A1- 2 904 098
- JP-A- 2008 249 175
- US-A1- 2011 302 931

## Description

### Domaine technique :

La présente invention concerne une machine magnétocalorique comprenant au moins un élément actif à base de matériau magnétocalorique, un arrangement magnétique destiné à soumettre ledit élément actif à un champ magnétique variable, créant alternativement dans ledit élément actif un cycle magnétocalorique d'échauffement et un cycle magnétocalorique de refroidissement, un organe caloporteur solide en contact thermique avec ledit élément actif, un dispositif d'entraînement agencé pour créer un déplacement alternatif relatif entre ledit organe caloporteur et ledit élément actif, et au moins un échangeur de chaleur pour transférer l'énergie thermique collectée par ledit organe caloporteur à au moins un dispositif externe situé en dehors de ladite machine magnétocalorique.

### Technique antérieure :

La technologie du froid magnétique est connue depuis plus d'une trentaine d'années et on sait les avantages qu'elle apporte en termes d'écologie et de développement durable. On connaît également ses limites quant à sa puissance calorifique utile et à son rendement. Dès lors, les recherches menées dans ce domaine tendent toutes à améliorer les performances d'une telle machine en jouant sur différents paramètres, tels que la puissance d'aimantation de l'arrangement magnétique, les performances des éléments actifs, la surface d'échange entre le caloporteur, qui est en général un fluide caloporteur, et les matériaux magnétocaloriques, les performances des échangeurs de chaleur, etc. Le fluide caloporteur utilisé le plus couramment est un liquide, de préférence de l'eau pure ou mélangée avec du glycol ou un autre additif, selon les températures de travail. Ainsi le choix du fluide caloporteur dépend de la plage de températures de travail de la machine. En outre, l'utilisation d'un fluide caloporteur est contraignante du fait des risques potentiels de fuite dans le réseau fluidique de la machine. Enfin, un fluide caloporteur a une capacité thermique faible par rapport à un solide caloporteur, de l'ordre de 1 à 100.

Certains matériaux solides peuvent être utilisés comme des organes caloporteurs. Ils sont en outre connus pour avoir des performances accrues en termes de conductivité thermique, de diffusivité, de capacité thermique et de propriétés physico-chimiques comme la température de la transition de phase. Les propriétés de ces matériaux solides caloporteurs permettent alors de dépasser les fréquences et les performances de fonctionnement atteintes avec des fluides caloporteurs, aussi bien en termes de puissance thermique, d'efficacité énergétique et de plage de température de travail.

Il existe déjà des machines magnétocaloriques qui utilisent un organe caloporteur solide. Cet organe caloporteur solide se présente sous la forme de barreaux métalliques cylindriques, d'environ 5mm, disposés parallèlement entre eux, et traversant l'élément actif de part en part. L'élément actif est dans ce cas constitué d'un ou de plusieurs blocs de matériau magnétocalorique superposés, traversés par des cavités correspondantes pour recevoir les barreaux métalliques. Ces derniers sont déplacés axialement et alternativement par rapport à l'élément actif, de manière synchronisée avec la variation du champ magnétique, pour réaliser la fonction de transport de l'énergie calorifique produite par l'élément actif en direction de dispositifs externes. Cette fonction de transport de l'énergie calorifique est assurée par un frottement à sec des barreaux métalliques dans les cavités de l'élément actif, les cavités assurant simultanément le guidage mécanique desdits barreaux. Les applications visées par ce type de machine sont à ce jour limitées à des appareils de climatisation dans lesquels les barreaux caloporteurs échangent directement avec l'air à refroidir.

Cette solution technique présente de nombreux inconvénients, et notamment :
- une usure prématurée des surfaces de contact entre les barreaux métalliques et les blocs de matériau magnétocalorique,
- un échauffement parasite généré par les frottements induits,
- une réduction des transferts thermiques et donc des performances thermiques due à des lames d'air piégées dans l'interface entre les blocs de matériau magnétocalorique et les barreaux métalliques. Elles sont induites par les jeux résiduels découlant des tolérances de fabrication des barreaux métalliques et des cavités dans les blocs de matériau magnétocalorique, ainsi que des états de surface des éléments en mouvement,
- un risque de flambage des barreaux métalliques si les jeux sont trop faibles, suite aux transitions de phases magnéto-structurales (changement de volume et de diamètre des matériaux magnétocaloriques et des barreaux métalliques en fonction des cycles magnétiques) et/ou aux dilatations thermiques,
- des à-coups et vibrations provoqués par les mouvements alternatifs des barreaux,
- un faible rapport entre la surface d'échange et le volume des pièces correspondantes à cause de la forme cylindrique des surfaces d'échange, réduisant là encore la capacité de transfert thermique. US 2011/302931 A1 divulgue une machine magnétocalorique selon le préambule de la revendication 1.

### Présentation de l'invention :

La présente invention vise à pallier ces inconvénients en proposant une nouvelle machine magnétocalorique de conception simple, fiable, durable, silencieuse et modulable, utilisant un organe caloporteur solide pour réaliser les fonctions d'advection (transport d'énergie calorifique) et de transfert thermique à des dispositifs externes, sans frottement, ni risque de flambage de l'organe caloporteur solide, dont le rapport entre les surfaces d'échange et le volume des pièces correspondantes est élevé, permettant d'optimiser la capacité de transfert thermique et d'augmenter fortement la puissance de la machine, tout en diminuant l'encombrement et le cout de fabrication de machine, augmentant ainsi le ratio « performances/coût », rendant cette machine économique et écologique.

Dans ce but, l'invention concerne une machine du genre indiqué en préambule, caractérisée en ce que ledit élément actif comporte un empilement de lames parallèles, en ce que ledit organe caloporteur comporte un empilement de plaques parallèles, intercalées entre les lames de l'élément actif moyennant un jeu fonctionnel, en ce que la longueur des plaques de l'organe caloporteur est supérieure à la longueur des lames de l'élément actif de sorte que la partie émergente desdites plaques de l'organe caloporteur forme au moins en partie ledit au moins un échangeur de chaleur, et en ce que ledit dispositif d'entrainement est couplé auxdites plaques de l'organe caloporteur ou auxdites lames de l'élément actif pour les déplacer en translation alternative parallèlement à elles-mêmes.

Grâce à cette construction nettement plus simple à réaliser que celle de l'art antérieur, on supprime les frottements entre l'organe caloporteur solide et l'élément actif magnétocalorique permettant d'atteindre tous les buts mentionnés ci-dessus.

Dans une forme préférée de l'invention, la machine magnétocalorique comporte en outre un dispositif de compression agencé pour contrôler ledit jeu fonctionnel entre les plaques de l'organe caloporteur et les lames de l'élément actif de sorte que le déplacement relatif entre elles ne génère aucun frottement.

Ledit dispositif de compression peut comporter un circuit de fluide de contact sous pression qui communique avec un logement contenant au moins ledit élément actif et ledit organe caloporteur, et qui génère entre lesdites plaques de l'organe caloporteur et lesdites lames dudit élément actif un film fluidique dont l'épaisseur définit ledit jeu fonctionnel.

Lesdites lames de l'élément actif ou lesdites plaques de l'organe caloporteur qui sont fixes, peuvent avantageusement comporter un chanfrein d'entrée agencé pour créer un coin de fluide lors du déplacement relatif entre lesdites lames et lesdites plaques et générer un effet de sol.

Dans une variante de réalisation de l'invention, lesdites lames de l'élément actif et/ou lesdites plaques de l'organe caloporteur peuvent comporter un revêtement d'atténuation du facteur de frottement agencé pour créer ledit jeu fonctionnel, ledit revêtement étant choisi dans le groupe comprenant : une pellicule ou un film de polytétrafluoroéthylène (PTFE), un lubrifiant solide.

Dans ladite forme de réalisation préférée, ledit dispositif d'entraînement est agencé pour déplacer lesdites plaques dudit organe caloporteur ou lesdites lames dudit élément actif uniquement par traction dans le sens de déplacement. Dans une des variantes de réalisation, ledit dispositif d'entrainement peut être couplé à au moins une des deux extrémités opposées desdites plaques de l'organe caloporteur par une liaison fixe, ou aux tranches longitudinales desdites plaques de l'organe caloporteur.

Les lames dudit élément actif et les plaques dudit organe caloporteur présentent avantageusement une section de forme identique, comprise dans le groupe comprenant : un plan, une courbe, une sinusoïde, deux parties planes parallèles et décalées reliées par une partie médiane inclinée, deux parties planes parallèles et alignées reliées par une partie médiane en triangle.

De préférence, la machine magnétocalorique comporte un boitier porte-matériaux comportant au moins un logement contenant au moins ledit élément actif et ledit organe caloporteur, ledit logement ayant une longueur au moins égale à la longueur de l'organe caloporteur additionnée de la course de déplacement dudit organe caloporteur par rapport audit élément actif.

Ledit logement peut comporter une zone centrale dans laquelle se situe ledit élément actif et deux zones de d'extrémité situées de part et d'autre de ladite zone centrale formant deux collecteurs, dans lesquels se situe alternativement la partie émergente des plaques de l'organe caloporteur.

Ledit au moins un échangeur de chaleur peut comporter un conduit traversant ledit boitier pour mettre en communication au moins un collecteur avec un dispositif externe et un fluide de transfert thermique. De manière préférentielle, le conduit dudit au moins un échangeur de chaleur s'étend sensiblement perpendiculairement audit collecteur et à la partie émergente correspondante desdites plaques de l'organe caloporteur qui forme un échangeur à plaque.

Ladite partie émergente de l'organe caloporteur peut comporter en outre un obturateur agencé pour fermer et ouvrir automatiquement et alternativement ledit conduit dudit au moins un échangeur de chaleur en fonction du déplacement alternatif dudit organe caloporteur.

Dans la forme de réalisation de l'invention, ledit dispositif d'entrainement peut être couplé audit arrangement magnétique pour synchroniser le déplacement alternatif dudit organe caloporteur ou dudit élément actif avec lesdits cycles magnétocaloriques.

### Brève description des figures :

La présente invention et ses avantages apparaîtront mieux dans la description suivante de plusieurs modes de réalisation donnés à titre d'exemples non limitatifs, en référence aux dessins annexés, dans lesquels :
- la figure 1 est une vue de face en coupe axiale agrandie de la partie active d'une machine magnétocalorique selon l'invention,
- la figure 2 est une vue en perspective de l'élément actif et de l'organe caloporteur solide formant la partie active de la machine de la figure 1,
- la figure 3 est une vue similaire à la figure 2 montrant un dispositif d'entrainement de l'organe caloporteur solide, selon un premier mode de réalisation,
- la figure 4 est une vue similaire à la figure 3 montrant un dispositif d'entrainement de l'organe caloporteur solide, selon un second mode de réalisation,
- la figure 5 est une vue de dessus en coupe axiale de la partie active de la machine de la figure 1, montrant le dispositif de compression des lames formant l'élément actif,
- la figure 6 est une vue agrandie du détail VI de la figure 5,
- la figure 7 montre dans les schémas A, B, C et D des vues en perspective montrant quatre assemblages différents de lames formant l'élément actif, et
- la figure 8 est une représentation schématique de la machine magnétocalorique de l'invention selon une configuration rotative.

### Description détaillée de l'invention :

Dans les exemples de réalisation illustrés, les éléments ou parties identiques portent les mêmes numéros de référence. En outre, les termes qui ont un sens relatif, tels que vertical, horizontal, droite, gauche, avant, arrière, au-dessus, en-dessous, etc. doivent être interprétés dans des conditions normales d'utilisation de l'invention, et telles que représentées sur les figures. Les axes X, Y et Z sont quant à eux définis par un repère orthonormé représenté dans les différentes figures annexées.

En référence aux figures annexées, la machine magnétocalorique 1 selon l'invention comporte au moins un et de préférence une pluralité d'éléments actifs 2 à base de matériau magnétocalorique, un arrangement magnétique 3 destiné à soumettre les éléments actifs 2 à un champ magnétique H variable pour créer alternativement dans lesdits éléments actifs 2 un cycle d'échauffement et un cycle de refroidissement. La machine de l'invention comporte également un organe caloporteur 4 solide en contact thermique avec chaque élément actif 2, un dispositif d'entraînement 5, 5' couplé à l'organe caloporteur 4 pour le déplacer alternativement par rapport aux éléments actifs 2 de manière synchronisée avec la variation du champ magnétique H. La machine de l'invention comporte enfin au moins un et de préférence deux échangeurs de chaleur 6, 7 disposés aux extrémités de l'élément actif pour transférer l'énergie thermique collectée par l'organe caloporteur 4 à au moins un et de préférence deux dispositifs externes (non représentés) qui sont situés à l'extérieur de la machine magnétocalorique 1.

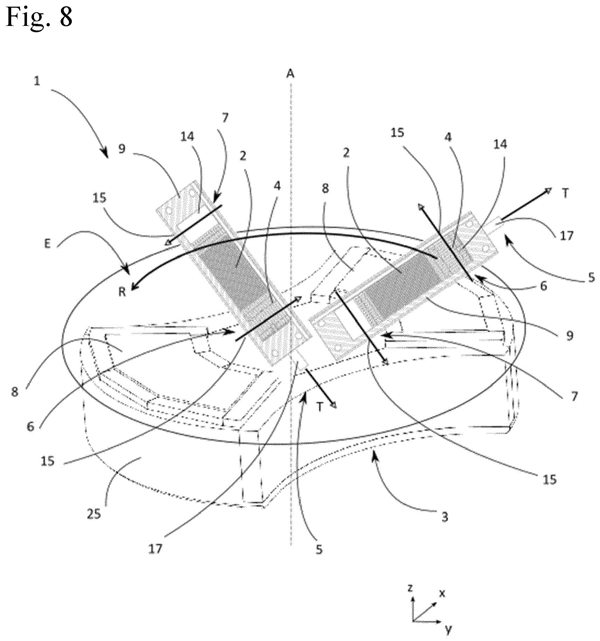

La machine magnétocalorique 1 peut présenter différentes configurations en fonction des applications, telles qu'une configuration rotative ou une configuration linéaire. Dans une configuration rotative (dont un exemple est représenté schématiquement à la figure 8 décrite plus loin), les éléments actifs 2 peuvent être disposés radialement en disque ou axialement en couronne. L'arrangement magnétique 3 peut être disposé radialement en deux disques de part et d'autre des éléments actifs 2 radiaux en disque, ou axialement en deux couronnes de part et d'autre des éléments actifs 2 axiaux en couronne. Les éléments actifs 2 sont positionnés dans l'entrefer E défini entre les deux disques ou les deux couronnes de l'arrangement magnétique 3. L'arrangement magnétique 3 peut comporter au moins une paire d'aimants 8 formant un pôle magnétique. La dimension angulaire ou radiale des aimants 8 peut correspondre à la dimension angulaire ou radiale d'un élément actif 2 ou de plusieurs éléments actifs 2 adjacents. L'arrangement magnétique 3 peut comporter plusieurs pôles magnétiques, répartis régulièrement et espacés l'un de l'autre par une zone vide ou une pièce amagnétique ou très faiblement magnétique. Les aimants 8 utilisés sont préférentiellement des aimants permanents, sans que cet exemple ne soit limitatif. De même tout autre mode de réalisation de l'arrangement magnétique peut convenir.

Les éléments actifs 2 sont portés par un boitier 9 porte-matériaux qui peut être fixe et forme un stator. L'arrangement magnétique 3 peut être déplacé en rotation continue autour de l'axe central A par rapport aux éléments actifs 2 et forme un rotor. Ce rotor est couplé à un actionneur (non représenté), tel qu'un moteur ou similaire. Bien entendu, la configuration inverse est également possible dans laquelle l'arrangement magnétique 3 est fixe et les éléments actifs 2 sont mobiles en rotation par rapport à l'arrangement magnétique.

Dans une configuration linéaire (non représentée), les éléments actifs 2 et l'arrangement magnétique 3 sont respectivement alignés dans des plans parallèles, et l'un des éléments actifs 2 ou de l'arrangement magnétique 3 est déplacé en translation alternative par rapport à l'autre. Dans tous les cas, les éléments actifs 2 sont répartis symétriquement dans la machine selon une symétrie axiale pour une configuration circulaire ou une symétrie planaire pour une configuration linéaire.

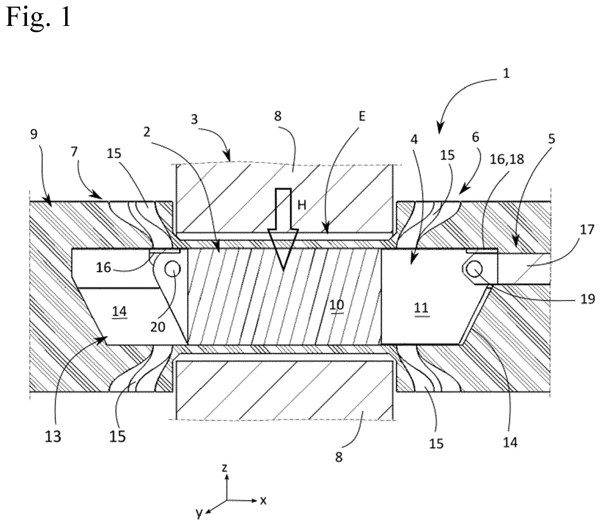

Les figures 1 à 7 ne montrent que la partie active de la machine magnétocalorique 1 selon l'invention, cette partie active pouvant être dupliquée autant de fois que nécessaire, aussi bien selon une configuration circulaire que linéaire. Dans l'exemple illustré, l'élément actif 2 est constitué d'une pluralité de lames 10 rigides, parallèles et empilées pour former un bloc s'inscrivant dans un parallélépipède. Et l'organe caloporteur 4 est constitué d'une pluralité de plaques 11 rigides, parallèles et intercalées entre les lames 10 empilées de l'élément actif 2. Le nombre N de plaques 11 de l'organe caloporteur 4 est dans ce cas égal au nombre N-1 de lames 10 de l'élément actif 2. De préférence, les lames 10 et les plaques 11 sont parallèles à la direction principale du champ magnétique variable représenté par la flèche H (voir figures 1, 2 et 6).

Les lames 10 constituant l'élément actif 2 sont des parallélogrammes, définis par une épaisseur selon l'axe Y faible voire très faible par rapport aux deux autres dimensions transversale et longitudinale, respectivement selon les axes X et Z du repère orthonormé. Elles sont formées à partir de ou constituées d'un ou de plusieurs matériaux magnétocaloriques, choisis dans le groupe comprenant le gadolinium, un alliage de gadolinium, un alliage de fer, un alliage de manganèse, un alliage de lanthane, lesdits alliages pouvant comporter au moins l'un des matériaux choisis dans le groupe comprenant au moins le silicium, le germanium, le fer, le magnésium, le phosphore, le manganèse, l'hydrogène, l'arsenic. Les matériaux magnétocaloriques au sein d'une même lame 10 et/ou au sein d'un même élément actif 2 peuvent présentent une même température de Curie ou des températures de Curie différentes organisées de manière croissante ou décroissante.

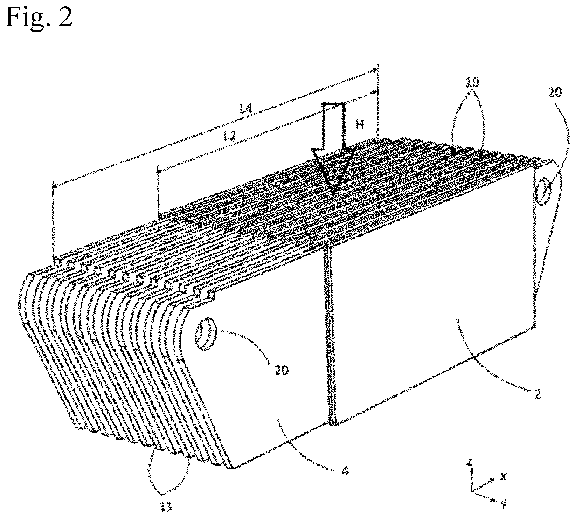

Les plaques 11 constituant l'organe caloporteur 4 sont préférentiellement des parallélogrammes, définis par une épaisseur selon l'axe Y faible voire très faible par rapport aux deux autres dimensions transversale et longitudinale, respectivement selon les axes X et Z du repère orthonormé. Elles sont formées à partir de ou constituées d'un ou de plusieurs matériaux solides, à haute conductivité thermique, et choisis dans la liste non limitative des matériaux métalliques et des polymères chargés. La composition de ces matériaux comporte, de façon non limitative, les matériaux suivants par ordre de préférence : aluminium, cuivre, étain, fer, argent, zinc, or, platine, sous forme métallique pure ou d'alliages, ou sous forme de poudres frittées avec un polymère. Le polymère peut être choisi dans la liste non limitative suivante : le polytétrafluoroéthylène (PTFE), le polyamide (PA), l'acrylonitrile butadiène styrène (ABS), le polychlorure de vinyle (PVC), des résines, ou similaires. La longueur L4 de l'organe caloporteur 4 selon l'axe X est supérieure à la longueur L2 de l'élément actif 2, par exemple de 25% à 100%, et d'environ un tiers dans l'exemple représenté (voir figure 2), sans que ces valeurs ne soient limitatives. La partie émergente de l'organe caloporteur 4 située en dehors de l'élément actif 2, d'un côté ou de l'autre dudit élément actif 2, va être exploitée en tant qu'échangeur de chaleur 6, 7.

L'épaisseur des lames 10 de l'élément actif 2 et des plaques 11 de l'organe caloporteur 4 peut être comprise en 5µm à 4mm, sans que ces valeurs ne soient limitatives. Les lames 10 et les plaques 11 peuvent avoir une même épaisseur ou des épaisseurs différentes. Toutes les combinaisons d'épaisseur dans la plage mentionnée ci-dessus sont possibles.

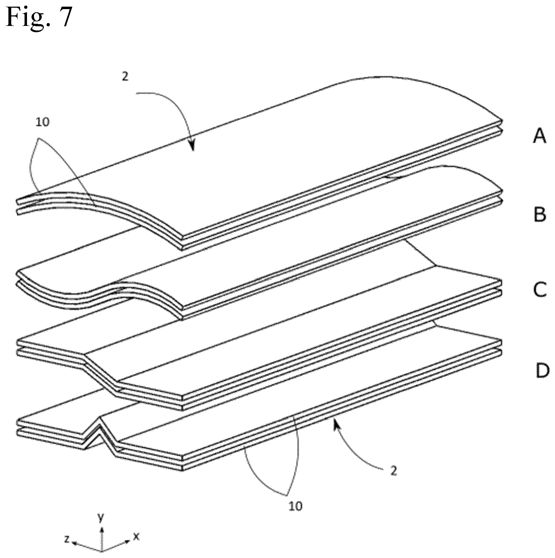

La forme des lames 10 de l'élément actif 2 et la forme des plaques 11 de l'organe caloporteur 4, et plus précisément leurs sections selon l'axe Y, sont préférentiellement identiques. Elles peuvent être planes, comme représentées dans les figures 1 à 6. Elles peuvent également être courbes, en vague, en triangle, ou en toute autre forme compatible. La figure 7 illustre quelques exemples de section, sans que ces exemples ne soient limitatifs. La figure 7, schéma A montre des lames courbes de section convexe, la figure 7, schéma B des lames en vague de section sinusoïdale, la figure 7, schéma C des lames comportant deux parties planes parallèles dans le plan XZ et décalées dans l'axe Y reliées par une partie médiane inclinée, la figure 7, schéma D des lames comportant deux parties planes parallèles et alignées dans le plan XZ et reliées par une partie médiane en triangle. Ces exemples ne sont bien entendu pas limitatifs, l'essentiel étant que la section des lames de l'élément actif et celle des plaques de l'organe caloporteur soient identiques et permettent le déplacement en translation relative de l'un par rapport à l'autre selon l'axe X. Ces différentes variantes de sections, en dehors de la section plane, ont l'avantage d'augmenter la surface d'échange pour des mêmes dimensions transversale et longitudinale selon les axes Z et X.

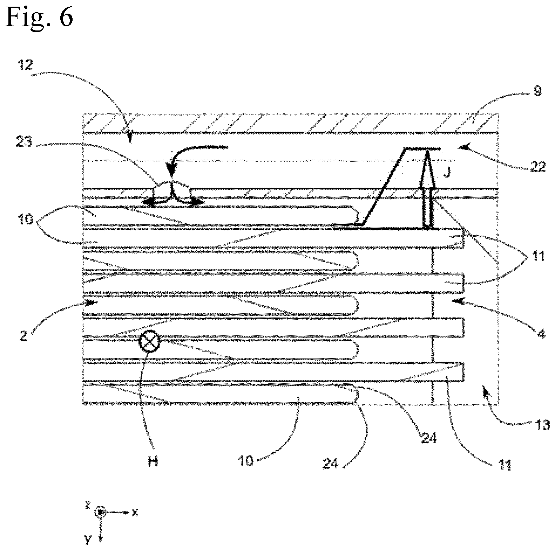

Dans l'exemple représenté, l'organe caloporteur 4 se déplace en translation alternative selon l'axe X par rapport à l'élément actif 2 via un dispositif d'entrainement 5, 5' qui sera décrit plus loin. Un dispositif de compression 12 qui sera également décrit plus loin permet de créer et de contrôler un jeu fonctionnel J (voir figure 6) minimum entre les plaques 11 de l'organe caloporteur 4 et les lames 10 de l'élément actif 2 pour empêcher tout contact et par conséquent tout frottement des pièces en mouvement par rapport aux pièces fixes.

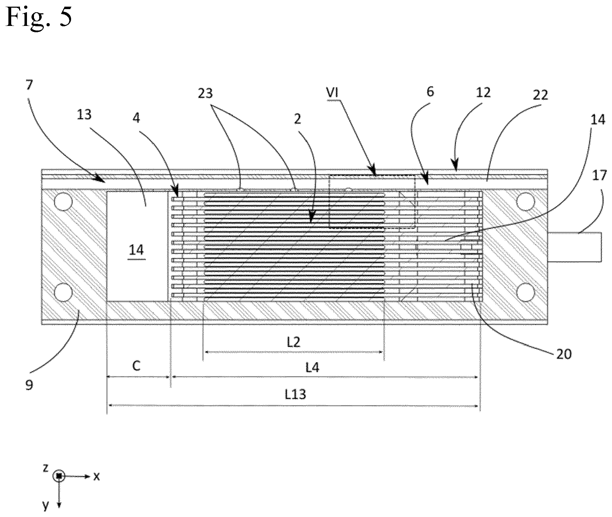

En référence plus particulièrement à la figure 1, le boitier 9 porte-matériaux de la machine magnétocalorique 1, appelé par la suite « boitier », comporte un logement 13 agencé pour contenir l'élément actif 2 et l'organe caloporteur 4 qui lui est associé. Dans cet exemple, le logement 13 a une section trapézoïdale dans le plan XZ et une section rectangulaire dans le plan YZ. Il a une longueur L13 selon l'axe X au moins égale à la longueur L4 de l'organe caloporteur 4 additionnée de sa course de déplacement C par rapport à l'élément actif 2 (voir figure 5). Ce logement 13 définit une zone centrale dans laquelle se situe l'élément actif 2 et deux zones d'extrémité de part et d'autre de la zone centrale, dans lesquelles se situe alternativement la partie émergente des plaques 11 de l'organe caloporteur 4. L'élément actif 2 est soumis à un champ magnétique H variable généré par les aimants 8 de l'arrangement magnétique 3 qui sont à l'extérieur du boitier 9 et se déplacent par rapport audit boitier 9 et à l'élément actif 2. Le champ magnétique est représenté par la flèche H dans l'axe Z, et les lames 10 de l'élément actif 2 ainsi que les plaques 11 de l'organe caloporteur 4 sont parallèles au champ magnétique H.

Le ou les échangeurs de chaleur 6, 7 sont intégrés en tout ou partie dans le boitier 9 de la machine magnétocalorique 1. Dans l'exemple illustré, les échangeurs de chaleur 6, 7 comportent les deux zones d'extrémité du logement 13, formant des collecteurs 14, et un ou plusieurs conduits 15 traversants, ménagés dans le boitier 9 pour mettre en communication chaque collecteur 14 avec un dispositif externe (non représenté). Les échangeurs de chaleur 6, 7 utilisent un fluide de transfert ou fluide caloporteur pour assurer la fonction de transfert thermique de l'organe caloporteur 4 vers les dispositifs externes (non représentés). Le fluide de transfert peut être un liquide aqueux ou non, chargé ou non de particules ou de nano particules pour accroître la capacité d'échange thermique.

Les parties émergentes de l'organe caloporteur 4 comportent un obturateur 16 qui va permettre de fermer et d'ouvrir automatiquement et alternativement les conduits 15 des échangeurs de chaleur 6, 7 en fonction du déplacement alternatif de l'organe caloporteur 4. Dans la figure 1, l'organe caloporteur 4 est positionné à droite de la figure et ouvre les conduits 15 correspondants de l'échangeur de chaleur 6 de droite tandis qu'il ferme via son obturateur 16 les conduits 15 correspondants de l'échangeur de chaleur 7 de gauche, et inversement lorsque l'organe caloporteur 4 est positionné à gauche de la figure (non représenté). Le transfert thermique s'effectue via le fluide de transfert circulant dans les conduits 15 ouverts correspondants à travers la partie émergente de l'organe caloporteur 4 dans le collecteur 14 correspondant dudit logement 13. Bien entendu, tout autre moyen d'obturation ou de commutation d'un échangeur de chaleur à l'autre peut convenir. Il est également possible de supprimer les obturateurs 16 pour que le fluide de transfert circule en continu dans les deux échangeurs de chaleur 6, 7, quelle que soit la phase du cycle magnétocalorique.

La position de travail illustrée à la figure 1 correspond à une phase d'échauffement du cycle magnétocalorique, dans laquelle l'élément actif 2 est soumis au champ magnétique H des aimants 8 provoquant l'élévation brusque de sa température au-delà de sa température de Curie (Tc), et l'organe caloporteur 4 en se déplaçant de gauche à droite dans le logement 13 au travers de l'élément actif 2, collecte les calories pour les transférer à un dispositif externe relié à l'échangeur de chaleur 6 de droite via le fluide de transfert qui circule perpendiculairement à travers l'organe caloporteur 4. La partie droite de la machine magnétocalorique 1 correspond à l'échangeur de chaleur 6 chaud raccordé à un dispositif externe capable d'exploiter ces calories, tel qu'à titre d'exemple non limitatif un système de chauffage, un processus industriel dans tout type d'industrie (alimentaire, chimique, pharmaceutique, mécanique, électronique, etc.), un système de tempérage, ou similaire.

La position de travail inverse de la figure 1 et non illustrée correspond à une phase de refroidissement du cycle magnétocalorique, dans laquelle l'élément actif 2 n'est pas soumis au champ magnétique H des aimants 8 provoquant une chute brutale de la température de l'élément actif 2 en-deçà de sa température de Curie, et l'organe caloporteur4 en se déplaçant de droite à gauche dans le logement 13, collecte les frigories pour les transférer à un dispositif externe relié à l'échangeur de chaleur 7 de gauche via le fluide de transfert circulant perpendiculaire audit organe caloporteur 4. La partie gauche de la machine magnétocalorique 1 correspond à l'échangeur de chaleur 7 froid raccordé à un dispositif externe capable d'exploiter ces frigories tel qu'un système de climatisation, un processus industriel dans tout type d'industrie (alimentaire, chimique, pharmaceutique, mécanique, électronique, etc.), un processus de production de froid, un dispositif de conservation des aliments, un surgélateur, un système de liquéfaction, ou similaire.

Le déplacement relatif des plaques 11 de l'organe caloporteur 4 ou des lames 11 de l'élément actif 2 par rapport au boitier 9 peut être obtenu par un entrainement mécanique direct ou un entrainement déporté via une commande mécanique selon les figures 1 à 4, hydraulique, électromagnétique ou magnétique à aimant permanents rotatifs. Le mouvement alternatif peut être généré par un système à bielle-manivelle, des cames, un plateau incliné du type pompe hydraulique, accouplé directement à la machine ou déporté par des dispositifs mécaniques. Ces exemples ne sont bien entendu pas limitatifs.

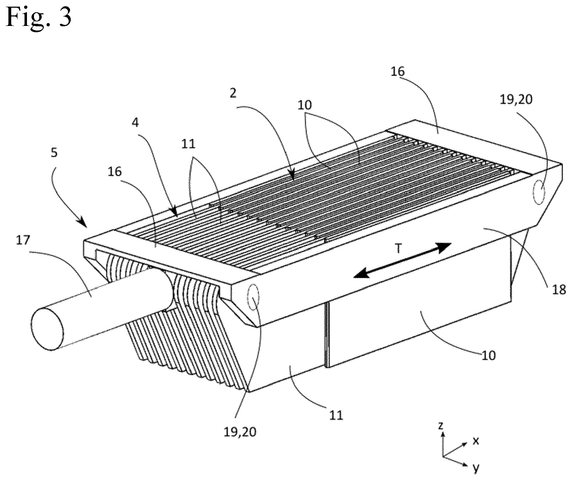

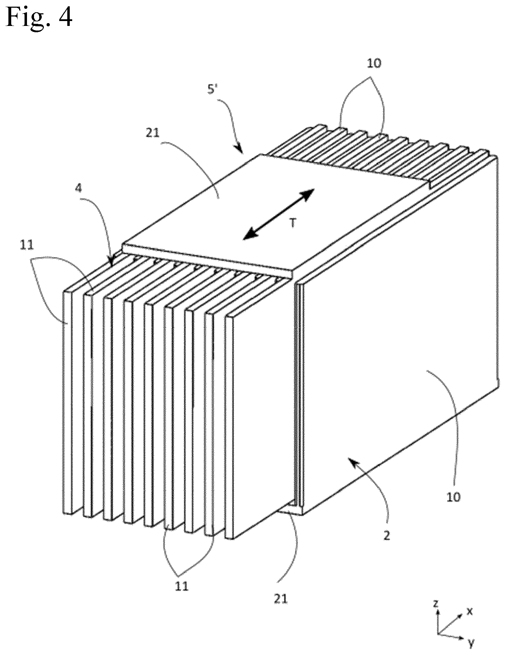

Dans l'exemple représenté, c'est l'organe caloporteur 4 qui est déplacé en translation alternative par rapport à l'élément actif 2, parallèlement aux lames 10 de l'élément actif 2 et selon l'axe X via un dispositif d'entrainement 5, 5'. Le sens de déplacement est représenté sur les figures 3 et 4 par la flèche T. Pour éviter tout risque de flambage des plaques 11 de l'organe caloporteur 4, du fait entre autres de leur faible épaisseur par rapport à leur surface, le dispositif d'entrainement 5, 5' est conçu pour déplacer lesdites plaques 11 uniquement par traction et non pas par poussée, et ce dans les deux sens de déplacement selon l'axe X.

Pour ce faire, un premier exemple de dispositif d'entrainement 5 est illustré dans les figures 1 à 3 et agencé pour entraîner les plaques 11 de l'organe caloporteur 4 par leurs extrémités. Il comporte une barre de traction 17 fixée à l'une des extrémités des plaques 11, qui s'étend parallèlement à l'axe X et traverse le logement 13 et le boitier 9 pour être couplé à un actionneur (non représenté) situé à l'extérieur du boitier 9. Cet actionneur peut être à titre d'exemple non limitatif un moteur linéaire, un vérin, un moteur rotatif couplé à une came, etc. Dans cet exemple, les plaques 11 de l'organe caloporteur 4 sont liées entre elles par une liaison fixe, de sorte que le déplacement alternatif de la barre de traction 17 ne génère aucun effort de poussée sur la plaque 11.

Cette liaison fixe est dans l'exemple représenté constituée d'un cadre tendeur 18 disposé autour des plaques 11 de l'organe caloporteur 4 et lié auxdites plaques 11 par des tiges de verrouillage 19 qui traversent respectivement les extrémités des plaques 11 pourvues d'un orifice de liaison 20. Les plaques 11 peuvent à cet effet comporter des extrémités en forme d'oreille comportant chacune un orifice de liaison 20. Les obturateurs 16 décrits précédemment peuvent avantageusement faire partie du cadre tendeur 18 (voir figure 3).

Un second exemple de dispositif d'entrainement 5' est illustré à la figure 4 et agencé pour entraîner les plaques 11 de l'organe caloporteur 4 par leurs tranches longitudinales selon l'axe X. Il comporte deux pièces de traction 21 qui sont liées aux tranches longitudinales des plaques 11 via tout type de liaison soudée, collée, rivetée, frittée, ou similaire. Les pièces de traction 21 et les plaques 11 de l'organe caloporteur 4 peuvent être réalisées d'un seul tenant dans le cas d'un procédé de fabrication par frittage, impression tridimensionnelle, ou similaire. Les pièces de traction 21 sont couplées à un actionneur (non représenté) comme dans l'exemple précédent.

La machine magnétocalorique 1 selon l'invention comporte en outre un dispositif de compression 12 agencé pour créer et contrôler le j eu fonctionnel J entre les plaques 11 de l'organe caloporteur 4 et les lames 11 de l'élément actif 2, de sorte que le déplacement de l'un par rapport à l'autre puisse s'effectuer sans aucun frottement. A cet effet, l'élément actif 2 et l'organe caloporteur 4 sont montés flottant l'un par rapport à l'autre et baignent dans un fluide de contact légèrement sous pression dans le logement 13 du boitier 9. La pression fluidique est relativement faible, de l'ordre par exemple de 0.05 bars à 0.5 bars sans que ces valeurs ne soient limitatives, et contrôlée par le dispositif de compression 12. Le fluide de contact peut être avantageusement le même que le fluide de transfert des échangeurs de chaleur 6, 7. Il peut également être un fluide distinct du fluide de transfert, avec ou non une composition différente.

Le dispositif de compression 12 peut être, à titre d'exemple non limitatif, un dispositif hydraulique selon les figures 5 et 6, pneumatique, mécanique ou électromécanique, et permet d'appliquer une pression adaptée sur les lames 10 et les plaques 11 sur toute la longueur de l'élément actif 2. Dans l'exemple représenté aux figures 5 et 6, le dispositif de compression 12 comporte un circuit fluidique sous pression pourvu d'au moins un canal d'alimentation 22 en fluide prévu dans le boitier 9 et d'un ou de plusieurs orifices de communication 23 disposés entre le canal d'alimentation 22 et le logement 13. S'il y a plusieurs orifices de communication 23, ils sont de préférence répartis sur la longueur de l'élément actif 2. Il permet de créer entre les plaques 11 de l'organe caloporteur 4 et les lames 10 de l'élément actif 2 un film de fluide ou film fluidique dont l'épaisseur définit le jeu fonctionnel J. L'épaisseur du film fluidique dépend de la pression hydrodynamique du fluide résultant de « l'effet de sol », de la viscosité du fluide et de la force de pression exercée par le dispositif de compression. Cette épaisseur peut être comprise de 0, 0 étant exclu, à 1mm, et égale préférentiellement à quelques microns.

L'effet de sol est généré par le mouvement relatif des plaques 11 de l'organe caloporteur 4 par rapport aux lames 10 de l'élément actif 2, à la manière d'un coussin d'air. Pour favoriser cet effet de sol, les arêtes des lames 10 qui s'étendent selon l'axe Z, de chaque côté de l'élément actif 2, sont biseautées pour former un chanfrein d'entrée 23 (voir figure 6). Le chanfrein d'entrée 23 d'une lame 10 fixe permet de créer avec la plaque 11 mobile adjacente un coin de fluide qui va soulever la lame 10 par rapport à la plaque 11 lors de son déplacement relatif de la valeur du jeu fonctionnel J.

Deux pompes (non représentées) assurent la circulation du fluide de transfert entre les collecteurs 14 communs aux extrémités correspondantes des éléments actifs 2, là où les plaques 11 de l'organe caloporteur 4 sortent des lames 10 de l'élément actif 2 sous la forme de peigne, et leurs échangeurs de chaleur 6, 7 respectifs chaud et froid. La pression de refoulement des pompes peut être prélevée pour alimenter le dispositif de compression 12 si cette fonction n'est pas réalisée par des pièces mécaniques déformables.

Selon des variantes complémentaires non représentées, les lames 10 de l'élément actif 2 et/ou les plaques 11 de l'organe caloporteur 4 peuvent être revêtues d'une pellicule ou d'un film isolant électrique et/ou d'atténuation du facteur de frottement composé de polytétrafluoroéthylène (PTFE), ou d'un lubrifiant solide (graphite, bisulfure de molybdène, de façon non exhaustive). Selon les cas, le fluide de contact pourrait être supprimé.

De même, le fluide de contact et/ou les plaques 11 de l'organe caloporteur 4 peuvent être des isolants électriques ou faiblement conducteurs d'électricité permettant d'éviter les courants de Foucault à l'intérieur de la machine susceptibles d'engendrer des forces parasites. Néanmoins, le champ magnétique H étant parallèle aux plaques 11 de l'organe caloporteur 4 et aux lames 10 de l'élément actif 2, les éventuels courants de Foucault induits sont significativement faibles, voire absents.

La figure 8 illustre schématiquement une machine magnétocalorique 1 selon l'invention présentant une configuration rotative autour d'un axe A. Les éléments actifs 2 sont disposés radialement en disque autour de l'axe A, et seuls deux éléments actifs 2 sont représentés sur la figure 8 pour en simplifier la lecture. L'arrangement magnétique 3 est disposé radialement en deux disques de part et d'autre du disque des éléments actifs 2, et seul un disque avec deux pôles magnétiques diamétralement opposés est représenté sur la figure 8 pour en simplifier la lecture. Un premier élément actif 2 est positionné dans le champ magnétique en regard d'un des pôles magnétiques et subit un cycle magnétocalorique d'échauffement, tandis que le second élément actif 2 est positionné hors du champ magnétique entre les deux pôles magnétiques et subit un cycle magnétocalorique de refroidissement. Dans cette configuration, le disque portant les éléments actifs 2 peut être fixe, tandis que l'arrangement magnétique 3 peut être mobile en rotation continue autour de l'axe A selon la flèche R. Chaque pôle magnétique de l'arrangement magnétique 3 comporte un aimant permanent 8 ou un assemblage d'aimants permanents 8 porté par un support d'aimants 25. Le support d'aimants 25 est de préférence réalisé en fer, ou un alliage de fer ou de nickel, ou toute autre matière ferromagnétique. Les boitiers porte-matériaux 9 peuvent être formés de pièces séparées ou rassemblés dans un unique boitier porte-matériaux 9 en forme de disque. Les organes caloporteurs 4 sont commandés en translation alternative via leur barre de traction 17 au moyen d'un dispositif d'entraînement 5 (non représenté). Et la circulation du fluide de transfert s'effectue via des pompes (non représentées) qui collectent les calories et/ou frigories à travers les échangeurs de chaleur 6 et 7 communiquant avec les collecteurs 14 et les organes caloporteurs 4 via les conduits 15.

Le dispositif d'entrainement 5, 5' de l'organe caloporteur 4, lorsqu'il est mécanique, peut-être couplé à l'arrangement magnétique 3 pour assurer une synchronisation du déplacement alternatif dudit organe caloporteur 4 avec les cycles magnétocaloriques. Il peut aussi ne pas être couplé à l'arrangement magnétique 3. Dans ce cas, la synchronisation des dispositifs d'entrainement respectifs de l'organe caloporteur 4 et de l'arrangement magnétique 3 peut être réalisée par une unité de pilotage électronique desdits dispositifs d'entraînement.

La machine magnétocalorique 1 selon l'invention présente de nombreux avantages par rapport aux machines magnétocaloriques de l'art antérieur utilisant aussi bien un fluide caloporteur qu'un caloporteur solide, à savoir :
- L'empilement des lames 10 de l'élément actif 2 en alternance avec des plaques 11 de l'organe caloporteur 4 solide évite de recourir à des entretoises ou intercalaires pour réaliser les canaux de la matrice poreuse de l'élément actif de l'art antérieur, et permet une surface d'échange thermique maximale par rapport au volume.
- Cet empilement est faiblement comprimé via le dispositif de compression 12 pour réduire le jeu fonctionnel J et absorber les variations dimensionnelles des lames 10 de l'élément actif 2, quel que soit leur état ferromagnétique ou paramagnétique.
- Le fluide de contact améliore l'efficacité de l'échange thermique entre l'organe caloporteur 4 et l'élément actif 2, sert de lubrifiant et empêche le contact direct solide-solide grâce au régime de fonctionnement hydrodynamique entre les lames 10 de l'élément actif 2 et les plaques 11 de l'organe caloporteur 4.
- Les plaques 11 de l'organe caloporteur 4, toujours tirées dans le sens de déplacement, ne peuvent pas flamber. En outre, la forme des plaques 11 en vague, sinusoïde ou triangle permet d'éviter le flambement dans le cas d'une mise en mouvement des plaques 11 par une seule de leurs extrémités.
- En dehors des lames 10 de l'élément actif 2, les plaques 11 de l'organe caloporteur 4 baignent dans le fluide de transfert qui circule vers les dispositifs externes, ne nécessitant ainsi pas de système de mise en mouvement alternatif dudit fluide. La structure en forme de peigne des plaques 11 de l'organe caloporteur 4 hors des lames 10 de l'élément actif 2 correspond à celle d'un échangeur à plaque qui est optimale pour le transfert thermique avec le fluide de transfert.
- La position relative symétrique des éléments actifs 2 déphasés entre eux dans la machine, permet d'équilibrer les efforts dynamiques découlant des accélérations mécaniques des organes caloporteur 4, évitant ainsi les vibrations et les nuisances sonores.
- Les propriétés physiques des matériaux utilisés pour réaliser les plaques 11 de l'organe caloporteur 4 permettent des gains de fréquence de fonctionnement de plus de 500% à 1000% par rapport aux machines magnétocaloriques à fluide caloporteur de l'art antérieur.
- L'orientation parallèle des plaques 11 de l'organe caloporteur 4 et des lames 10 de l'élément actif 2 par rapport au champ magnétique H, et l'épaisseur du film fluidique et/ou du film de revêtement, ainsi que la composition des plaques 11 lorsqu'elles sont en polymère chargé, limitent les courants de Foucault dans l'élément actif 2 induits par les variations de champ magnétique, et également les champs dé-magnétisants dans les éléments actifs 2 en raison de leur conductivité électrique.

## Revendications

1. Machine magnétocalorique (1) comprenant au moins un élément actif (2) à base de matériau magnétocalorique, un arrangement magnétique (3) destiné à soumettre ledit élément actif (2) à un champ magnétique (H) variable, créant alternativement dans ledit élément actif (2) un cycle magnétocalorique d'échauffement et un cycle magnétocalorique de refroidissement, un organe caloporteur (4) solide en contact thermique avec ledit élément actif (2), un dispositif d'entraînement (5, 5') agencé pour créer un déplacement alternatif relatif entre ledit organe caloporteur (4) et ledit élément actif (2), et au moins un échangeur de chaleur (6, 7) pour transférer l' énergie thermique collectée par ledit organe caloporteur (4) à au moins un dispositif externe situé en dehors de ladite machine magnétocalorique (1), **caractérisée en ce que** ledit élément actif (2) comporte un empilement de lames (10) parallèles, **en ce que** ledit organe caloporteur (4) comporte un empilement de plaques (11) parallèles, intercalées entre les lames (10) de l'élément actif (2) moyennant un jeu fonctionnel (J), **en ce que** la longueur (L4) des plaques (11) de l'organe caloporteur (4) est supérieure à la longueur (L2) des lames (10) de l'élément actif (2) de sorte que la partie émergente desdites plaques (11) de l'organe caloporteur (4) forme au moins en partie ledit au moins un échangeur de chaleur (6, 7), et **en ce que** ledit dispositif d'entrainement (5, 5') est couplé auxdites plaques (11) de l'organe caloporteur (4) ou auxdites lames (10) de l'élément actif (2) pour les déplacer en translation (T) alternative parallèlement à elles-mêmes.

2. Machine magnétocalorique (1) selon la revendication 1, **caractérisée en ce qu'**elle comporte en outre un dispositif de compression (12) agencé pour contrôler ledit jeu fonctionnel (J) entre les plaques (11) de l'organe caloporteur (4) et les lames (10) de l'élément actif (2) de sorte que le déplacement relatif entre elles ne génère aucun frottement.

3. Machine magnétocalorique (1) selon la revendication 2, **caractérisée en ce que** ledit dispositif de compression (12) comporte un circuit de fluide de contact sous pression qui communique avec un logement (13) contenant au moins ledit élément actif (2) et ledit organe caloporteur (4), et qui génère entre lesdites plaques (11) de l'organe caloporteur (4) et lesdites lames (10) dudit élément actif (2) un film fluidique dont l'épaisseur définit ledit jeu fonctionnel (J).

4. Machine magnétocalorique (1) selon la revendication 3, **caractérisée en ce que** lesdites lames (10) de l'élément actif (2) ou lesdites plaques (11) de l'organe caloporteur (4) qui sont fixes, comportent un chanfrein d'entrée (23) agencé pour créer un coin de fluide lors du déplacement relatif entre lesdites lames (10) et lesdites plaques (11) et générer un effet de sol.

5. Machine magnétocalorique (1) selon la revendication 1, **caractérisée en ce que** lesdites lames (10) de l'élément actif (2) et/ou lesdites plaques (11) de l'organe caloporteur (4) comportent un revêtement d'atténuation du facteur de frottement agencé pour créer ledit jeu fonctionnel (J), ledit revêtement étant choisi dans le groupe comprenant : une pellicule ou un film de polytétrafluoroéthylène (PTFE), un lubrifiant solide.

6. Machine magnétocalorique (1) selon la revendication 1, **caractérisée en ce que** ledit dispositif d'entraînement (5, 5') est agencé pour déplacer lesdites plaques (11) dudit organe caloporteur (4) ou lesdites lames (10) dudit élément actif (2) uniquement par traction dans le sens de déplacement.

7. Machine magnétocalorique (1) selon la revendication 6, **caractérisée en ce que** ledit dispositif d'entrainement (5) est couplé à au moins une des deux extrémités opposées desdites plaques (11) de l'organe caloporteur (4) par une liaison fixe.

8. Machine magnétocalorique (1) selon la revendication 6, **caractérisée en ce que** ledit dispositif d'entrainement (5') est couplé aux tranches longitudinales desdites plaques (11) de l'organe caloporteur (4).

9. Machine magnétocalorique (1) selon la revendication 1, **caractérisée en ce que** les lames (10) dudit élément actif (2) et les plaques (11) dudit organe caloporteur (4) présentent une section de forme identique, comprise dans le groupe comprenant : un plan, une courbe, une sinusoïde, deux parties planes parallèles et décalées reliées par une partie médiane inclinée, deux parties planes parallèles et alignées reliées par une partie médiane en triangle.

10. Machine magnétocalorique (1) selon l'une quelconque des revendications précédentes, **caractérisée en ce qu'**elle comporte un boitier (9) porte-matériaux comportant au moins un logement (13) contenant au moins ledit élément actif (2) et ledit organe caloporteur (4), **en ce que** ledit logement (13) a une longueur (L13) au moins égale à la longueur (L4) de l'organe caloporteur (4) additionnée de la course de déplacement (C) dudit organe caloporteur (4) par rapport audit élément actif (2).

11. Machine magnétocalorique (1) selon la revendication 10, **caractérisée en ce que** ledit logement (13) comporte une zone centrale dans laquelle se situe ledit élément actif (2) et deux zones de d'extrémité situées de part et d'autre de ladite zone centrale formant deux collecteurs (14), dans lesquels se situe alternativement la partie émergente des plaques (11) de l'organe caloporteur (4).

12. Machine magnétocalorique (1) selon la revendication 11, **caractérisée en ce que** ledit au moins un échangeur de chaleur (6, 7) comporte un conduit (15) traversant ledit boitier (9) pour mettre en communication au moins un collecteur (14) avec un dispositif externe et un fluide de transfert thermique.

13. Machine magnétocalorique (1) selon la revendication 12, **caractérisée en ce que** le conduit (15) dudit au moins un échangeur de chaleur (6, 7) s'étend sensiblement perpendiculairement audit collecteur (14) et à la partie émergente correspondante desdites plaques (11) de l'organe caloporteur (4) qui forme un échangeur à plaque.

14. Machine magnétocalorique (1) selon la revendication 12, **caractérisée en ce que** ladite partie émergente de l'organe caloporteur (4) comporte un obturateur (16) agencé pour fermer et ouvrir automatiquement et alternativement ledit conduit (15) dudit au moins un échangeur de chaleur (6, 7) en fonction du déplacement alternatif dudit organe caloporteur (4).

15. Machine magnétocalorique (1) selon la revendication 1, **caractérisée en ce que** ledit dispositif d' entrainement (5, 5') est couplé audit arrangement magnétique (3) et permet de synchroniser le déplacement alternatif dudit organe caloporteur (4) ou dudit élément actif (2) avec lesdits cycles magnétocaloriques.

## Patentansprüche

1. Magnetokalorische Maschine (1) mit mindestens einem aktiven Element (2) auf Basis eines magnetokalorischen Materials, einer magnetischen Anordnung (3), die dazu bestimmt ist, das aktive Element (2) einem variablen Magnetfeld (H) auszusetzen, wodurch in dem aktiven Element (2) abwechselnd ein magnetokalorischer Erwärmungszyklus und ein magnetokalorischer Abkühlungszyklus erzeugt werden, einem festen Wärmeträgerorgan (4) in thermischem Kontakt mit dem aktiven Element (2), einer Antriebsvorrichtung (5, 5'), die so angeordnet ist, dass sie eine relative Hin- und Herbewegung zwischen dem Wärmeträgerorgan (4) und dem aktiven Element (2) erzeugt, und mindestens einem Wärmetauscher (6, 7) zur Übertragung der von dem Wärmeträgerorgan (4) gespeicherten Wärmeenergie an mindestens eine externe Vorrichtung, die sich außerhalb der magnetokalorischen Maschine (1) befindet, **dadurch gekennzeichnet, dass** das aktive Element (2) einen Stapel paralleler Lamellen (10) umfasst, dass das Wärmeträgerorgan (4) einen Stapel paralleler Platten (11) umfasst, die zwischen den Lamellen (10) des aktiven Elements (2) mit einem funktionellen Spiel (J) eingefügt sind, dass die Länge (L4) der Platten (11) des Wärmeträgerorgans (4) über die Länge (L2) der Lamellen (10) des aktiven Elements (2) hinausgeht, so dass der hervorstehende Teil der Platten (11) des Wärmeträgerorgans (4) zumindest teilweise den mindestens einen Wärmetauscher (6, 7) bildet, und dadurch, dass die Antriebsvorrichtung (5, 5') mit den Platten (11) des Wärmeträgerorgans (4) oder den Lamellen (10) des aktiven Elements (2) gekoppelt ist, um diese in einer translatorischen Hin- und Herbewegung (T) parallel zu sich zu verschieben.

2. Magnetokalorische Maschine (1) nach Anspruch 1, **dadurch gekennzeichnet, dass** sie außerdem eine Kompressionsvorrichtung (12) umfasst, die so angeordnet ist, dass sie das genannte funktionelle Spiel (J) zwischen den Platten (11) des Wärmeträgerorgans (4) und den Lamellen (10) des aktiven Elements (2) so steuert, dass die relative Verschiebung zwischen ihnen keine Reibung erzeugt.

3. Magnetokalorische Maschine (1) nach Anspruch 2, **dadurch gekennzeichnet, dass** die Kompressionsvorrichtung (12) einen Kreislauf mit einem unter Druck stehenden Kontaktfluid umfasst, der mit einem Aufnahmeelement (13) in Verbindung steht, das mindestens das aktive Element (2) und das Wärmeträgerorgan (4) enthält, und der zwischen den Platten (11) des Wärmeträgerorgans (4) und diesen Lamellen (10) des aktiven Elements (2) einen Fluidfilm erzeugt, dessen Dicke das funktionelle Spiel (J) vorgibt.

4. Magnetokalorische Maschine (1) nach Anspruch 3, **dadurch gekennzeichnet, dass** die Lamellen (10) des aktiven Elements (2) oder die Platten (11) des Wärmeträgerorgans (4), die feststehend sind, eine Eintrittsschräge (23) aufweisen, die so angeordnet ist, dass sie bei der Relativbewegung zwischen den Lamellen (10) und den Platten (11) einen Fluidkeil bildet und einen Bodeneffekt erzeugt.

5. Magnetokalorische Maschine (1) nach Anspruch 1, **dadurch gekennzeichnet, dass** die Lamellen (10) des aktiven Elements (2) und/oder die Platten (11) des Wärmeträgerorgans (4) zur Abschwächung des Reibungsfaktors mit einer Beschichtung versehen sind, die so angeordnet ist, dass sie das funktionelle Spiel (J) erzeugt, wobei die Beschichtung aus folgender Gruppe ausgewählt ist: einen Film oder eine Folie aus Polytetrafluorethylen (PTFE), ein festes Schmiermittel.

6. Magnetokalorische Maschine (1) nach Anspruch 1, **dadurch gekennzeichnet, dass** die Antriebsvorrichtung (5, 5') so angeordnet ist, dass die Platten (11) des Wärmeträgerorgans (4) oder die Lamellen (10) des aktiven Elements (2) nur durch Zug in Bewegungsrichtung bewegt werden.

7. Magnetokalorische Maschine (1) nach Anspruch 6, **dadurch gekennzeichnet, dass** die Antriebsvorrichtung (5) über eine feste Verbindung mit mindestens einem der beiden gegenüberliegenden Enden der Platten (11) des Wärmeträgerorgans (4) gekoppelt ist.

8. Magnetokalorische Maschine (1) nach Anspruch 6, **dadurch gekennzeichnet, dass** die Antriebsvorrichtung (5') mit den Längsrändern der Platten (11) des Wärmeträgerorgans (4) gekoppelt ist.

9. Magnetokalorische Maschine (1) nach Anspruch 1, **dadurch gekennzeichnet, dass** die Form des Querschnitts der Lamellen (10) des aktiven Elements (2) und der Platten (11) des Wärmeträgerorgans (4) identisch und in folgender Gruppe enthalten ist: eine Ebene, eine Kurve, eine Sinuskurve, zwei parallele und versetzte ebene Teile, die durch einen geneigten Mittelteil verbunden sind, zwei parallele und ausgerichtete ebene Teile, die durch einen Mittelteil in Form eines Dreiecks miteinander verbunden sind.

10. Magnetokalorische Maschine (1) nach einem der vorhergehenden Ansprüche, **dadurch gekennzeichnet, dass** sie ein materialtragendes Gehäuse (9) mit mindestens einem Aufnahmeelement (13) umfasst, das mindestens das aktive Element (2) und das Wärmeträgerorgan (4) enthält, und dass die Länge (Ll3) des Aufnahmeelements (13) mindestens der Länge (L4) des Wärmeträgerorgans (4) plus dem Verfahrweg (C) des Wärmeträgerorgans (4) in Bezug auf das aktive Element (2) entspricht.

11. Magnetokalorische Maschine (1) nach Anspruch 10, **dadurch gekennzeichnet, dass** das Aufnahmeelement (13) einen zentralen Bereich, in dem sich das aktive Element (2) befindet, und zwei Endbereiche umfasst, die sich auf beiden Seiten des zentralen Bereichs befinden und zwei Sammler (14) bilden, in denen sich abwechselnd der auftauchende Teil der Platten (11) des Wärmeträgerorgans (4) befindet.

12. Magnetokalorische Maschine (1) nach Anspruch 11, **dadurch gekennzeichnet, dass** der mindestens eine Wärmetauscher (6, 7) eine Leitung (15) aufweist, die durch das Gehäuse (9) verläuft, um mindestens einen Sammler (14) mit einer externen Vorrichtung und einem Wärmeübertragungsfluid in Verbindung zu bringen.

13. Magnetokalorische Maschine (1) nach Anspruch 12, **dadurch gekennzeichnet, dass** die Leitung (15) des mindestens einen Wärmetauschers (6, 7) im Wesentlichen senkrecht zum Sammler (14) und dem entsprechenden austretenden Teil der Platten (11) des Wärmeträgerorgans (4) verläuft, das einen Plattenwärmetauscher bildet.

14. Magnetokalorische Maschine (1) nach Anspruch 12, **dadurch gekennzeichnet, dass** der austretende Teil des Wärmeträgerorgans (4) eine Verschlussvorrichtung (16) umfasst, die so angeordnet ist, dass sie die Leitung (15) des mindestens einen Wärmetauschers (6, 7) in Abhängigkeit von der Hin- und Herbewegung des Wärmeträgerorgans (4) automatisch und abwechselnd schließt und öffnet.

15. Magnetokalorische Maschine (1) nach Anspruch 1, **dadurch gekennzeichnet, dass** die Antriebsvorrichtung (5, 5') mit der magnetischen Anordnung (3) gekoppelt ist und die Hin- und Herbewegung des Wärmeträgerorgans (4) oder des aktiven Elements (2) mit den magnetokalorischen Zyklen synchronisiert.

## Claims

1. A magnetocaloric machine (1) comprising at least one active element (2) based on magnetocaloric material, a magnetic arrangement (3) intended to subject said active element (2) to a variable magnetic field (H), creating alternately in said active element (2) a magnetocaloric heating cycle and a magnetocaloric cooling cycle, a solid heat-transport member (4) in thermal contact with said active element (2), a drive device (5, 5') arranged to create a relative reciprocating movement between said heat-transport member (4) and said active element (2), and at least one heat exchanger (6, 7) for transferring the thermal energy collected by said heat-transport member (4) to at least one external device located outside said magnetocaloric machine (1), **characterised in that** said active element (2) comprises a stack of parallel blades (10), **in that** said heat-transport member (4) comprises a stack of parallel plates (11), interposed between the blades (10) of the active element (2) with a functional clearance (J), **in that** the length (L4) of the plates (11) of the heat-transport member (4) is greater than the length (L2) of the blades (10) of the active element (2) so that the emerging part of said plates (11) of the heat-transport member (4) forms at least in part said at least one heat exchanger (6, 7), and **in that** said drive device (5, 5') is coupled to said plates (11) of the heat-transport member (4) or to said blades (10) of the active element (2) in order to move them in alternating translation (T) parallel to themselves.

2. The magnetocaloric machine (1) according to claim 1, **characterised in that** it further comprises a compression device (12) arranged to control said functional clearance (J) between the plates (11) of the heat-transport member (4) and the blades (10) of the active element (2) so that the relative movement between them does not generate any friction.

3. The magnetocaloric machine (1) according to claim 2, **characterised in that** said compression device (12) comprises a pressurized contact fluid circuit which communicates with a housing (13) containing at least said active element (2) and said heat-transport member (4), and which generates, between said plates (11) of the heat-transport member (4) and said blades (10) of said active element (2), a fluidic film the thickness of which defines said functional clearance (J).

4. The magnetocaloric machine (1) according to claim 3, **characterised in that** said blades (10) of the active element (2) or said plates (11) of the heat-transport member (4) which are fixed, comprise an inlet chamfer (23) arranged to create a wedge of fluid during the relative movement between said blades (10) and said plates (11) and generate a ground effect.

5. The magnetocaloric machine (1) according to claim 1, **characterised in that** said blades (10) of the active element (2) and/or said plates (11) of the heat-transport member (4) comprise a friction factor attenuation coating arranged to create said functional clearance (J), said coating being selected from the group comprising: a polytetrafluoroethylene (PTFE) pellicle or film, a solid lubricant.

6. The magnetocaloric machine (1) according to claim 1, **characterised in that** said drive device (5, 5') is arranged to move said plates (11) of said heat-transport member (4) or said blades (10) of said active element (2) only by pulling in the direction of movement.

7. The magnetocaloric machine (1) according to claim 6, **characterised in that** said drive device (5) is coupled to at least one of the two opposite ends of said plates (11) of the heat-transport member (4) by a fixed connection.

8. The magnetocaloric machine (1) according to claim 6, **characterised in that** said drive device (5') is coupled to the longitudinal edges of said plates (11) of the heat-transport member (4).

9. The magnetocaloric machine (1) according to claim 1, **characterised in that** the blades (10) of said active element (2) and the plates (11) of said heat-transport member (4) have a section of identical shape, included in the group comprising: a plane, a curve, a sinusoid, two parallel and offset planar parts connected by an inclined median part, two parallel and aligned planar parts connected by a triangular median part.

10. The magnetocaloric machine (1) according to any one of the preceding claims, **characterised in that** it comprises a material-holder housing (9) comprising at least one housing (13) containing at least said active element (2) and said heat-transport member (4), **in that** said housing (13) has a length (L13) at least equal to the length (L4) of the heat-transport member (4) plus the displacement stroke (C) of said heat-transport member (4) relative to said active element (2).

11. The magnetocaloric machine (1) according to claim 10, **characterised in that** said housing (13) comprises a central area in which said active element (2) is located and two end areas located on either side of said central area forming two collectors (14), in which the emerging part of the plates (11) of the heat-transport member (4) is alternately located.

12. The magnetocaloric machine (1) according to claim 11, **characterised in that** said at least one heat exchanger (6, 7) comprises a duct (15) passing through said housing (9) to place at least one collector (14) in communication with an external device and a heat-transport fluid.

13. The magnetocaloric machine (1) according to claim 12, **characterised in that** the duct (15) of said at least one heat exchanger (6, 7) extends substantially perpendicular to said collector (14) and to the corresponding emergent part of said plates (11) of the heat-transport member (4) which forms a plate exchanger.

14. The magnetocaloric machine (1) according to claim 12, **characterised in that** said emerging part of the heat-transport member (4) comprises a shutter (16) arranged to automatically and alternately close and open said duct (15) of said at least one heat exchanger (6, 7) as a function of the alternating movement of said heat-transport member (4).

15. The magnetocaloric machine (1) as claimed in claim 1, **characterised in that** said drive device (5, 5') is coupled to said magnetic arrangement (3) and makes it possible to synchronize the reciprocating movement of said heat-transport member (4) or of said active element (2) with said magnetocaloric cycles.
